# EUROPEAN PATENT SPECIFICATION

(11) **EP 3 330 665 B1**
(45) Date of publication and mention of the grant of the patent: **06.07.2022**
(21) Application number: 17202551.2
(22) Date of filing: 20.11.2017
(51) Int. Cl.: G01C 19/5677, G01C 25/00

(54) **DUAL-MODE VIBRATORY RESONATOR GYROSCOPE**
RESONATORKREISEL MIT DUALEM VIBRATIONSMUSTER
GYROSCOPE RÉSONANT À DOUBLE MODE VIBRATOIRE

(30) Priority: 02.12.2016 US 201615368206
(43) Date of publication of application: 06.06.2018
(73) Proprietor: Northrop Grumman Systems Corporation, Falls Church, VA 22042-4511 (US)
(72) Inventor: TRUSOV, Alexander, Woodland Hills, CA 91367 (US)
(74) Representative: FARAGO Patentanwaltsgesellschaft mbH

(56) References cited:
- EP-A2- 2 175 236
- US-A1- 2005 092 084
- US-A1- 2013 312 518

## Description

### TECHNICAL FIELD

This disclosure relates generally to sensing systems, and more specifically to a self-calibrating resonator gyroscope.

### BACKGROUND

There are a number different types of gyroscopes that are configured to calculate rotation about a sensitive (i.e., input) axis. One type of gyroscope is a Coriolis vibratory gyroscope (CVG). One example of a CVG is a tuning fork gyroscope in which two masses (e.g. tines) can vibrate in plane along a drive axis. In response to an applied angular rate about an input axis parallel to the tines of the tuning fork, Coriolis forces cause the tines to vibrate out of plane along a sense axis (e.g., 90° relative to a drive axis). The amplitude of the out-of-plane motion in open loop instruments or the force required to rebalance and null the out-of-plane motion in closed-loop instruments can correspond to a measure of the angular rate applied about the input axis. Another example of a CVG is a Resonator gyroscope in which a "wine glass" shaped resonator is caused to vibrate at a fundamental resonant frequency. In a fundamental or N=2 mode, the displacement of points on the vibrating resonator is in the form of a standing wave with antinodes and nodes that are separated by 45° in the circumferential direction. In force-rebalance operation, one of the antinodes can be maintained along a drive axis. In a resonator gyroscope, an angular rotation applied about the axis of symmetry of the resonator (e.g., input axis) can cause the standing wave to lag in angular displacement relative to the housing, which can thus be indicative of rotation of the resonator gyroscope about the sensitive axis.

US 2005/092084 A1 discloses a rate sensing device including a cylindrical vibratory resonator, a hemispherical vibratory resonator or a substantially planar vibratory resonator having a substantially ring or hoop-like shape structure, which resonators have inner and outer peripheries extending around a common axis, first carrier mode drive means for causing the resonator to vibrate in a Cos n₁ theta carrier mode to provide a first rate sensing channel along the common axis, where n₁ has an integer value of 2 or more, and second carrier mode drive means for causing the resonator to vibrate in a Cos n₂ theta carrier mode to provide a second rate sensing channel along the common axis where n₂ has an integer value of 2 or more and where n₂ is not equal to n1, which first and second rate sensing channels are independent of one another and operate over different rate ranges where the rate range increases for higher values of n₁ and n₂.

EP 2 175 236 A2 discloses a self-calibrating gyroscope system providing improved estimates of, and compensation or calibration for, scale factor errors and bias errors. The gyroscope system employs a plurality of gyroscope units having sense or input axes in a mutually non-parallel arrangement. The number of gyroscope units is preferably at least one more than the number of axes for which rate estimates is required. A Mode Reversal technique is used to obtain an estimate of bias error for a selected gyroscope. A Random Closed-Loop Scale Factor technique is used to obtain an estimate of scale factor error for a selected gyroscope. Because the Mode Reversal technique temporarily disrupts operation of the affected gyroscope, each of the gyroscopes may be taken offline temporarily, in turn, for calibration, and thereafter returned to normal operation. Because at least one redundant gyroscope is provided, when a selected gyroscope is offline, rate information from the remaining operating gyroscopes can be used to derive a reference rate about the axis of the offline gyroscope

### SUMMARY

One example includes a resonator gyroscope according to appended claim 1.

Another example includes a method for controlling a resonator gyroscope according to appended claim 7.

Another example includes a multi-axis gyroscope system according to appended claim 6.

### BRIEF DESCRIPTION OF THE DRAWINGS

FIG. 1 illustrates an example of a resonator gyroscope.
FIG. 2 illustrates an example of a sensing system.
FIG. 3 illustrates an example diagram of periodic motion of a sensing system.
FIG. 4 illustrates another example diagram of periodic motion of a sensing system.
FIG. 5 illustrates an example of a multi-axis resonator gyroscope.
FIG. 6 illustrates an example of a method for controlling a resonator gyroscope.

### DETAILED DESCRIPTION

This disclosure relates generally to sensing systems, and specifically to a self-calibrating resonator gyroscope. A resonator gyroscope can include a sensing system and a controller. The sensing system includes a plurality of electrodes (e.g., eight electrodes) arranged about a sensitive axis. The electrodes are configured to electrostatically force a resonator (e.g., a hemispherical resonator) into a substantially periodic motion based on the application of the forcer signals to the electrodes. The electrodes can also be configured to provide an indication of rotation about a sensitive axis of the resonator gyroscope based on pickoff signals. The controller can generate the forcer signals to provide the substantially periodic motion of the resonator concurrently in each of a plurality of separate vibration pattern modes. The vibration pattern modes can correspond to, for example, an N=2 vibration pattern mode and an N=3 vibration pattern mode. As an example, the forcer signals can be generated to have separate frequencies, such that the vibration pattern modes do not interfere with each other with respect to the forcer signals and the associated pickoff signals.

Based on the operation of the forcer signals to provide the substantially periodic motion of the resonator in each of the vibration pattern modes concurrently, the resonator gyroscope can provide efficient and accurate operation. As a first example, the resonator gyroscope can operate to measure rotation of the resonator gyroscope about the sensitive axis via first pickoff signals associated with a first vibration pattern mode while concurrently being calibrated (e.g., via a calibration signal) via second pickoff signals associated with the second vibration pattern mode. As another example, the resonator gyroscope can operate to measure rotation of the resonator gyroscope about the sensitive axis in a force-rebalance manner via the first pickoff signals associated with the first vibration pattern mode while concurrently measuring rotation of the resonator gyroscope about the sensitive axis in a whole-angle manner via the second pickoff signals associated with the second vibration pattern mode. As yet another example, the resonator gyroscope can be calibrated via the first pickoff signals associated with the first vibration pattern mode while concurrently being calibrated via the second pickoff signals associated with the second vibration pattern mode. Therefore, the resonator gyroscope can operate in a variety of ways based on operating concurrently in separate vibration pattern modes.

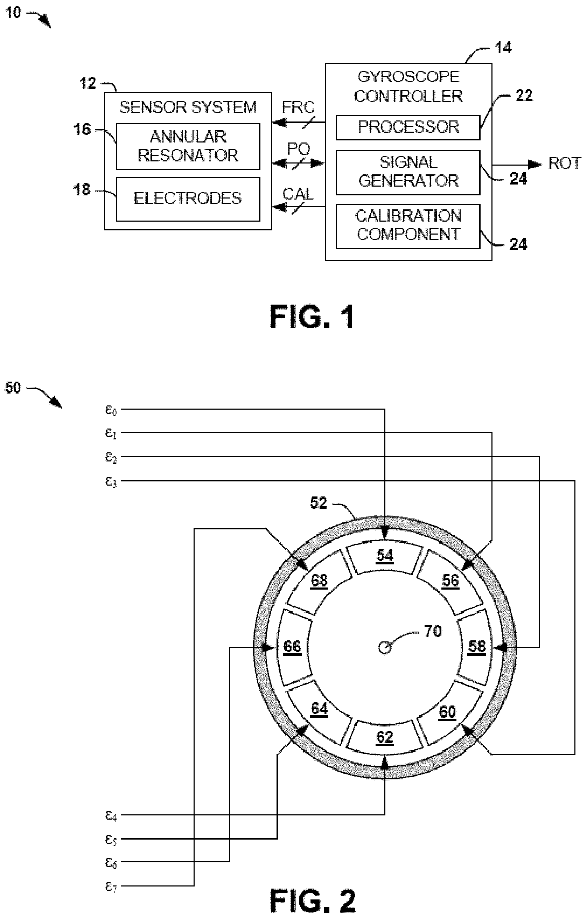

FIG. 1 illustrates an example of a resonator gyroscope 10. The resonator gyroscope 10 can correspond to any of a variety of different types of gyroscopes that implement vibratory motion, such as a Coriolis vibratory gyroscope (CVG). The resonator gyroscope 10 can be implemented in any of a variety of applications with which accurate measurement of rotation about a sensitive axis may be necessary, such as aerospace and nautical navigation. The resonator gyroscope 10 includes a sensing system 12 and a controller 14.

The sensing system 12 includes a resonator 16 that can be arranged as a deformable material having an elastic property and being provided in one of a variety of different forms. For example, the resonator 16 can be an elastic hemisphere, an elastic ring, a disk, or any of a variety of other types of resonators that can provide periodic motion in an axi-symmetric manner with respect to the sensitive axis. The sensing system 12 also includes a set of electrodes 18 that are arranged with respect to the resonator 16. For example, the electrodes 18 can be arranged in an annular arrangement between the sensitive axis and the resonator 16, such that the resonator 16 substantially surrounds the electrodes 18. The electrodes 18 are configured to generate electrostatic force in response to forcer signals FRC provided by the controller 14 to provide deformation or motion of the resonator 16, such as to provide a periodic motion of the resonator 16 in a plurality of vibration pattern modes concurrently.

For example, the vibration pattern modes can include an N=2 vibration pattern mode and an N=3 vibration pattern mode. As described herein, the term "N" describes half the number of antinodes of the vibration pattern mode. Therefore, the N=2 vibration pattern mode describes four antinodes of the resonator 16 along four substantially equally angularly-separated principle axes, and the N=3 vibration pattern mode provides for six antinodes of the resonator 16 along six substantially equally angularly-separated principle axes. Alternatively, other vibration pattern modes (e.g., N=1, 4, 5, ...) can be implemented. As an example, the vibration pattern modes can be provided via the forcer signals FRC at different frequencies based on the frequencies of the forcer signals FRC. As an example, the frequencies of each of the separate sets of forcer signals can have a difference that is greater than a desired measurement bandwidth of the resonator gyroscope 10. Therefore, perturbations that affect the pickoff signals of only one of the vibration pattern modes does not affect the pickoff signals associated with other vibration pattern mode(s) across the frequency response of the associated pickoff signals.

As an example, the electrodes 18 can be implemented to provide force-rebalance of the angular displacement of the standing wave on the resonator 16 and concurrently provide nulling of the quadrature effects that can degrade or otherwise affect the standing wave. In addition, the electrodes 18 can include and/or can be implemented as pickoff electrodes that can provide pickoff signals PO corresponding to the motion of the resonator 16 to measure the rotation of the sensing system 12 about the sensitive axis, demonstrated in the example of FIG. 1 as ROT. Thus, as a first example, the electrodes 18 can include dedicated forcer electrodes and pickoff electrodes, or as a second example, the electrodes 18 could implement dual forcer and pickoff functionality.

The controller 14 includes a processor 22 and a signal generator 24. The signal generator 24 is configured to generate the forcer signals FRC that are provided to the electrodes 18 based on the pickoff signals PO that are provided to the sensing system 12 (e.g., via the signal generator 24) for capacitive measurement of the of the deformation of the resonator 16 with respect to the electrodes 18 via the processor 22. As an example, one set of the forcer signals FRC can be generated by the signal generator 24 based on a set of equations, such as described in U.S. Patent Application No. 15/296,774 (Attorney Docket No. NG(NSD)-025345). Therefore, the forcer signals FRC can be generated to provide a non-integer ratio between the number of electrodes 18 and the vibration pattern mode, such as based on implementing an N=3 vibration pattern mode with eight electrodes 18. In addition, the controller 14 includes a calibration component 26 that is configured to generate a calibration signal CAL. As an example, the calibration signal CAL can correspond to any of a variety of methods of self-calibration of a resonator gyroscope, such as a predetermined signal injected into the force rebalance signals FRC to implement bias and/or scale-factor calibration, mode-reversal, or other types of self-calibration implementations, such as described in U.S. Patent Application No. 15/256,168 (Attorney Docket No. NG(NSD)-025094).

As an example, the controller 14 can be configured to measure the rotation ROT of the resonator gyroscope 10 about the sensitive axis in a force-rebalance manner and/or a whole-angle manner. For example, the forcer signals FRC can be provided to a first portion of the electrodes 18 to provide the periodic motion of the resonator 16 in response to one or more of the pickoff signals PO. The pickoff signals PO can be provided to the processor 22 that generates the forcer signals FRC, such as based on disparate phases of respective resultant electrostatic forces provided via the electrodes 18. Thus, the forcer signals FRC can control the amplitudes of the electrostatic forces and provide a measure of the rate of angular rotation ROT of the sensing system 12 about the sensitive axis (e.g., in the example of force-rebalance operation), and also control quadrature effects. Thus, the controller 14 can provide the measurement of the angular rate of rotation ROT about the input axis as an output signal ROT based on the pickoff signals.

Based on the operation of the forcer signals FRC to provide the substantially periodic motion of the resonator 16 in each of the vibration pattern modes concurrently, the resonator gyroscope 10 can provide efficient and accurate operation. The controller 14 measures the rotation ROT of the resonator gyroscope 10 about the sensitive axis via first pickoff signals PO₁ associated with a first vibration pattern mode (e.g., N=2) while concurrently being calibrated (e.g., via the calibration signal CAL that can control or dictate one of a variety of different calibration methods) via second pickoff signals PO₂ associated with the second vibration pattern mode (e.g., N=3). For example, the controller 14 can be configured to measure rotation ROT of the resonator gyroscope 10 about the sensitive axis via the first pickoff signals PO₁ associated with a first vibration pattern mode and concurrently calibrate the resonator gyroscope 10 via the second pickoff signals PO₂ associated with the second vibration pattern mode during a first time duration. The controller 14 can thus calibrate the resonator gyroscope 10 via the first pickoff signals PO₁ associated with the first vibration pattern mode and concurrently measure rotation ROT of the resonator gyroscope 10 about the sensitive axis via the second pickoff signals PO₂ associated with second vibration pattern mode during a second time duration. Accordingly, the controller 14 can substantially continuously alternate between the first time duration and the second time duration, such that the resonator gyroscope 10 can be substantially continuously calibrated and can continue to measure the rotation ROT of the resonator gyroscope 10 about the sensitive axis in an uninterrupted manner.

As a second example, the controller 14 can operate to obtain a first measurement of rotation ROT of the resonator gyroscope 10 about the sensitive axis in a force-rebalance manner via the first pickoff signals PO₁ associated with the first vibration pattern mode while concurrently obtaining a second measurement of rotation ROT of the resonator gyroscope about the sensitive axis in a whole-angle manner via the second pickoff signals PO₂ associated with the second vibration pattern mode. The force-rebalance manner can thus correspond to one manner of calculating rotation ROT of the resonator gyroscope 10 about the sensitive axis, while the whole-angle manner (e.g., integration manner) can correspond to another different manner of calculating rotation ROT of the resonator gyroscope 10 about the sensitive axis. As an example, the processor 22 can be configured to implement an algorithm that is configured to combine the first and second measurements to measure the rotation ROT of the resonator gyroscope 10 about the sensitive axis. Therefore, the processor 22 can generate a single measurement of the rotation ROT of the resonator gyroscope 10 about the sensitive axis based on the first and second measurements of the rotation ROT of the resonator gyroscope 10 about the sensitive axis. For example, the algorithm can be configured to provide integration of the first and second measurements, statistical analysis/comparison of the first and second measurements, or any other ways to combine the first and second measurements to obtain a single measurement of the rotation ROT of the resonator gyroscope 10 about the sensitive axis. Such redundant measurement of rotation ROT can thus provide a more accurate and/or improved performance of the measurement of the rotation ROT of the resonator gyroscope 10 about the sensitive axis, and/or can provide improved stability with respect to bias and/or scale-factor errors.

As yet another example, the controller 14 can be configured to obtain a calibration of the resonator gyroscope 10 via the first pickoff signals PO₁ associated with the first vibration pattern mode while concurrently obtaining a calibration of the resonator gyroscope 10 via the second pickoff signals PO₂ associated with the second vibration pattern mode. For example, the calibration component 26 can be configured to provide the same or different calibration methodologies (e.g., self-calibration, mode reversal, signal-injection, or other calibration techniques) to calibrate the resonator gyroscope 10 in each of the first and second vibration pattern modes (e.g., via the signal(s) CAL). Furthermore, the controller 14 can be configured to implement any combination of and/or alternate between the measurement and calibration procedures described herein. For example, the controller 14 can provide any combination of measuring rotation ROT of the resonator gyroscope 10 about the sensitive axis in each of the first and second vibration pattern modes, measuring the rotation ROT of the resonator gyroscope 10 about the sensitive axis in one of the vibration pattern modes while concurrently calibrating the resonator gyroscope 10 in another of the vibration pattern modes, and calibrating the resonator gyroscope 10 in both of the vibration pattern modes. Accordingly, the resonator gyroscope 10 can operate in a variety of ways based on operating concurrently in separate vibration pattern modes.

FIG. 2 illustrates an example of a sensing system 50. The sensing system 50 can correspond to the sensing system 12 in the example of FIG. 1. Therefore, reference is to be made to the example of FIG. 1 in the following description of the example of FIG. 2.

The sensing system 50 includes a resonator 52 that substantially surrounds a plurality of electrodes. As an example, the resonator 52 can be configured as an elastic hemispherical shell, but could have other geometric arrangements (e.g., an elastic ring). The plurality of electrodes includes a first electrode 54, a second electrode 56, a third electrode 58, a fourth electrode 60, a fifth electrode 62, a sixth electrode 64, a seventh electrode 66, and an eighth electrode 68. The electrodes 54, 56, 58, 60, 62, 64, 66, and 68 are demonstrated as arranged in an oppositely-disposed symmetrical annular arrangement about a sensitive axis 70, demonstrated as perpendicular to the plane of the page of FIG. 2, and thus perpendicular to the axes associated with the vibration pattern mode, as described in greater detail herein. However, it is to be understood that the sensing system 50 is not limited to eight electrodes, or an oppositely-disposed symmetrical annular arrangement of the electrodes 54, 56, 58, 60, 62, 64, 66, and 68 about the sensitive axis 70.

In the example of FIG. 2, the electrodes 54, 56, 58, 60, 62, 64, 66, and 68 are provided signals ε that can correspond to forcer signals and/or pickoff signals. A first signal ε₀ is demonstrated as being provided to the first electrode 54, a second signal ε₁ is demonstrated as being provided to the second electrode 56, a third signal ε₃ is demonstrated as being provided to the third electrode 58, and a fourth signal ε₃ is demonstrated as being provided to the fourth electrode 60. Similarly, a fifth signal ε₄ is demonstrated as being provided to the fifth electrode 62, a sixth signal ε₅ is demonstrated as being provided to the sixth electrode 64, a seventh signal ε₆ is demonstrated as being provided to the seventh electrode 66, and an eighth signal ε₇ is demonstrated as being provided to the eighth electrode 68. While the example of FIG. 2 demonstrates that a signal ε is provided to each of the electrodes 54, 56, 58, 60, 62, 64, 66, and 68, it is to be understood that a proper subset of the signals ε can be provided as forcer voltages ε to a respective proper subset of the electrodes 54, 56, 58, 60, 62, 64, 66, and 68, such as in the example of some of the electrodes 54, 56, 58, 60, 62, 64, 66, and 68 being dedicated to pickoff.

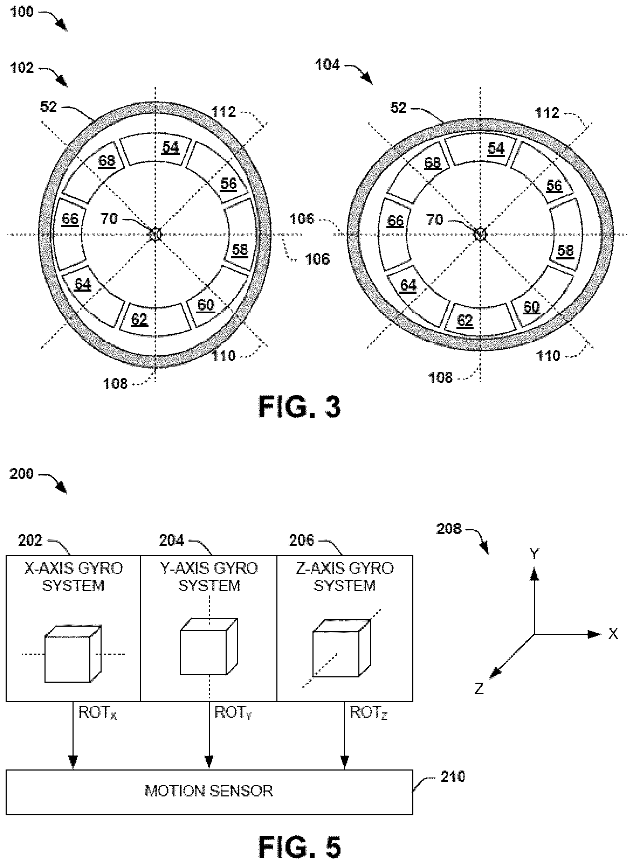

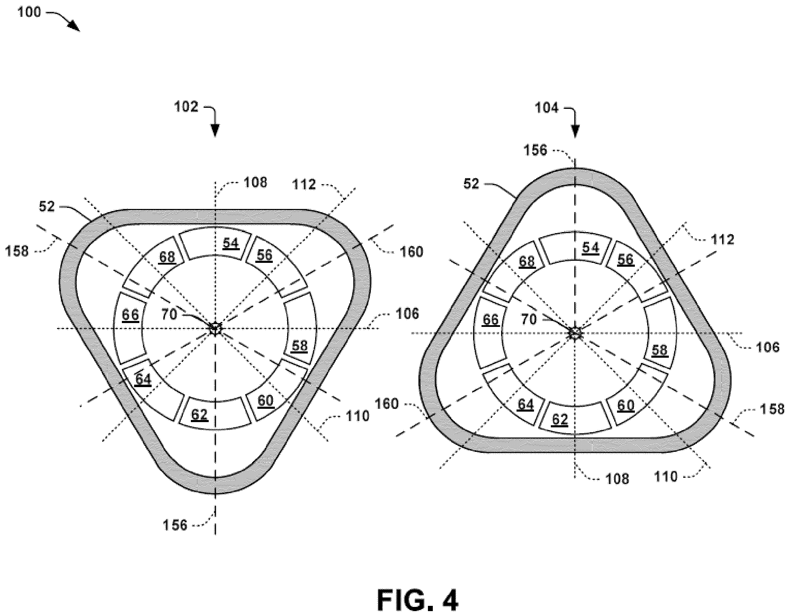

In response to the application of the signals ε provided as forcer voltages, the electrodes 54, 56, 58, 60, 62, 64, 66, and 68 can provide an electrostatic force that acts upon the resonator 52. In response, the resonator 52 is electrostatically attracted to the electrodes 54, 56, 58, 60, 62, 64, 66, and 68 based on a relative phase of the forcer voltages ε, and thus a relative phase of the electrostatic forces. The forcer voltages ε can, for example, have two separate sets of signals modulated together and applied at separate frequencies (e.g., across one or more orders of magnitude) and concurrently applied to the electrodes 54, 56, 58, 60, 62, 64, 66, and 68. As a result, the resonator 52 is deformed in each of two or more vibration pattern modes. For example, a first set of forcer voltages ε can provide an N=2 vibration pattern mode at a first frequency, and a second set of forcer voltages ε can provide an N=3 vibration pattern mode. The state of the resonator 52 in response to the application of the forcer voltages ε is demonstrated in the examples of FIGS. 3 and 4.

FIG. 3 illustrates another example diagram 100 of N=2 periodic motion of the sensing system 50. Due to the elastic property of the resonator 52, the resonator 52 can rebound at approximately half of a period of the resonant frequency. In response, the resonator 52 oscillates between a first state corresponding to a time T=0 and a second state corresponding to a time T=1/2F₁, where F₁ is the vibration frequency of the first vibration pattern mode. The first state is demonstrated in the example of FIG. 3 at 102 and the second state is demonstrated at 104. In the first state 102, corresponding to the time T=0, the resonator 52 is demonstrated as being extended and contracted along two orthogonal axes, demonstrated as 106 and 108, and also demonstrates two other orthogonal axes 110 and 112 that are 45° angularly offset from the axes 106 and 108, and which thus correspond to quadrature axes. Therefore, the axes 106, 108, 110, and 112 are defined by the electrodes 54, 56, 58, 60, 62, 64, 66, and 68. Therefore, the example of FIG. 3 demonstrates the motion and application of forcer and pickoff signals that correspond to the N=2 vibration pattern mode.

FIG. 4 illustrates an example diagram 150 of N=3 periodic motion of the sensing system 50. Due to the elastic property of the resonator 52, the resonator 52 can rebound at approximately half of a period of the resonant frequency. In response, the resonator 52 oscillates between a first state corresponding to a time T=0 and a second state corresponding to a time T=1/2F₂, where F₂ is the vibration frequency of the second vibration pattern mode, which is different from the vibration frequency F₁. The first state is demonstrated in the example of FIG. 4 at 152 and the second state is demonstrated at 154. In the first state 152, corresponding to the time T=0, the resonator 52 is demonstrated as being extended and contracted along three 120° axes, demonstrated as 156, 158, and 160, which are relative to the axes 106, 108, 110, and 112 defined by the electrodes 54, 56, 58, 60, 62, 64, 66, and 68. In the example of FIG. 4, the axis 156 is demonstrated as being collinear with the axis 108. Alternatively, the axis 156 can be collinear with the axis 106. Therefore, the example of FIG. 4 demonstrates the motion and application of forcer and pickoff signals that correspond to the second vibration pattern mode corresponding to the N=3 vibration pattern mode, which can thus operate concurrently with the N=2 vibration pattern mode demonstrated in the example of FIG. 3.

FIG. 5 illustrates an example of a three-axis gyroscope system 200 in accordance with an aspect of the invention. As an example, the three-axis gyroscope system 200 can be implemented in any of a variety of navigation control systems, such as for aircraft and/or spacecraft, or device to monitor yaw, pitch, and roll rotational motion information.

The three-axis gyroscope system 200 includes an X-axis gyroscope system 202, a Y-axis gyroscope system 204, and a Z-axis gyroscope system 206. As an example, each of the X-axis, Y-axis, and Z-axis gyroscope systems 202, 204, and 206 can be configured substantially similar to the resonator gyroscope 10 in the example of FIG. 1. In the example of FIG. 5, the X-axis gyroscope system 202 can have a sensitive axis about the X-axis, the Y-axis gyroscope system 204 can have a sensitive axis about the Y-axis, and the Z-axis gyroscope system 206 can have a sensitive axis about the Z-axis. The sensitive axes of rotation of the respective resonator gyroscopes 202, 204, and 206 are indicated in the example of FIG. 5 by a Cartesian coordinate system 208.

In the example of FIG. 5, each of the X-axis, Y-axis, and Z-axis gyroscope systems 202, 204, and 206 are demonstrated as outputting signals that include the respective rotation measurements ROTₓ, ROT_{y} and ROT_{z} to a motion sensor 210. The motion sensor 210 can thus be configured to determine an aggregate three-axis rotational motion of the associated vehicle or device that includes the three-axis gyroscope system 200. Therefore, the yaw, pitch, and roll of the associated vehicle or device that includes the three-axis gyroscope system 200 can be determined. Accordingly, the motion sensor 210 can be configured to display, output, and/or report the three-axis rotational motion of the associated vehicle or device that includes the three-axis gyroscope system 200.

Each of the X-axis, Y-axis, and Z-axis resonator gyroscopes 202, 204, and 206 can include electrodes that are configured to generate electrostatic force in response to forcer signals (e.g., the forcer signals FRC) provided by respective controllers to provide deformation or motion of respective resonators, such as to provide a periodic motion of each of the respective resonators in a plurality of vibration pattern modes concurrently. Accordingly, the three-axis gyroscope system 200 can provide the rotation measurements ROTₓ, ROT_{y} and ROT_{z} about all three of the sensitive axes, and can be calibrated in each of the three orthogonal axes substantially concurrently to provide the rotation measurements ROTₓ, ROT_{y} and ROT_{z} about all three of the sensitive axes in a more accurate and uninterrupted manner, similar to as described previously. Additionally or alternatively, each of the X-axis, Y-axis, and Z-axis gyroscope systems 202, 204, and 206 can provide redundant calibrations of the X-axis, Y-axis, and Z-axis gyroscope systems 202, 204, and 206 or the rotation measurements ROTₓ, ROT_{y}, and ROT_{z} about the respective X-axis, Y-axis, and Z-axis gyroscope systems 202, 204, and 206 in a redundant manner, similar to as described previously. Accordingly, the three-axis gyroscope system 200 can be implemented instead of typical three-axis gyroscope systems that require four or six separate gyroscopes to provide calibration and measurement in all three respective axes.

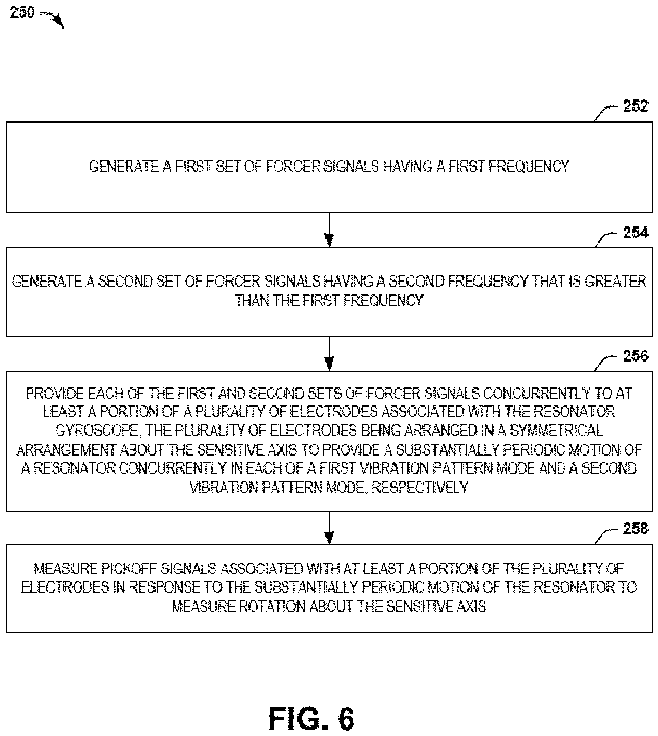

In view of the foregoing structural and functional features described above, a method in accordance with various aspects of the present disclosure will be better appreciated with reference to FIG. 6. While, for purposes of simplicity of explanation, the method of FIG. 6 is shown and described as executing serially, it is to be understood and appreciated that the present disclosure is not limited by the illustrated order, as some aspects could, in accordance with the present disclosure, occur in different orders and/or concurrently with other aspects from that shown and described herein. Moreover, not all illustrated features may be required to implement a method in accordance with an aspect of the present disclosure.

FIG. 6 illustrates a method 250 for controlling a resonator gyroscope (e.g., the resonator gyroscope 10). At 252, a first set of forcer signals (e.g., the forcer signals FRC₁) having a first frequency is generated. At 254, a second set of forcer signals (e.g., the forcer signals FRC₂) having a second frequency that is greater than the first frequency is generated. At 256, each of the first and second sets of forcer signals is provided concurrently to at least a portion of a plurality of electrodes (e.g., the electrodes 18) associated with the resonator gyroscope. The plurality of electrodes can be arranged about the sensitive axis to provide a substantially periodic motion of a resonator (e.g., the resonator 16) concurrently in each of a first vibration pattern mode (e.g., an N=2 vibration pattern mode) and a second vibration pattern mode (e.g., an N=3 vibration pattern mode), respectively. At 258, pickoff signals (e.g., the pickoff signals PO) associated with at least a portion of the plurality of electrodes are measured in response to the substantially periodic motion of the resonator to measure rotation about the sensitive axis.

## Claims

1. A resonator gyroscope (10) comprising:
a sensing system (12, 50) comprising a plurality of electrodes (18, 54, 56, 58, 60, 62, 64, 66, 68) arranged about a sensitive axis (70) and configured to electrostatically force a resonator (16) into a substantially periodic motion based on a plurality of forcer signals (FRC) applied to the plurality of electrodes (18, 54, 56, 58, 60, 62, 64, 66, 68), and configured to provide an indication of rotation (ROT) about a sensitive axis (70) of the resonator gyroscope (10); and
a controller (14) configured to generate the plurality of forcer signals (FRC) to provide the substantially periodic motion of the resonator (16) concurrently in each of a plurality of separate vibration pattern modes having different frequencies and to measure the rotation (ROT) of the resonator gyroscope (10) about the sensitive axis (70) in response to a plurality of pickoff signals (PO) associated with the substantially periodic motion in a first of the vibration pattern modes ;
**characterised in that** the controller is further configured to concurrently calibrate the resonator gyroscope (10) in a second of the vibration pattern modes.

2. The resonator gyroscope (10) of claim 1, wherein the first of the vibration pattern modes is first vibration pattern mode having a first frequency and the second of the vibration pattern modes is a second vibration pattern mode having a second frequency that is greater than the first frequency.

3. The resonator gyroscope (10) of claim 1, wherein the vibration pattern modes comprise an N=2 vibration pattern mode and an N=3 vibration pattern mode, wherein N is half the number of antinodes of the vibration pattern mode.

4. The resonator gyroscope (10) of claim 3, wherein the controller (14) is configured to alternate between calibration of the resonator gyroscope (10) via the second of the vibration pattern modes while measuring the rotation (ROT) of the resonator gyroscope (10) about the sensitive axis (70) via the first of the vibration pattern modes and calibration of the resonator gyroscope (10) via the first of the vibration pattern modes while measuring the rotation (ROT) of the resonator gyroscope (10) about the sensitive axis (70) via the second of the vibration pattern modes.

5. The resonator gyroscope (10) of claim 1, wherein the controller (14) is configured to generate the plurality of forcer signals (FRC) to provide the vibratory resonant motion of the resonator (16) in an axi-symmetric manner with respect to the sensitive axis (70).

6. A multi-axis gyroscope system (200) comprising the resonator gyroscope (10) of claim 1 configured as a first resonator gyroscope (202) configured to measure rotation (ROT) of the multi-axis gyroscope system (200) about an X-axis, the multi-axis gyroscope system (200) further comprising:
a second resonator gyroscope (204) configured to measure rotation (ROT) of the multi-axis gyroscope system (200) about a Y-axis; and
a third resonator gyroscope (206) configured to measure rotation (ROT) of the multi-axis gyroscope system (200) about a Z-axis.

7. A method (250) for controlling a resonator gyroscope (10), the method comprising:
generating (252) a first set of forcer signals (FRC) having a first frequency;
generating (254) a second set of forcer signals (FRC) having a second frequency that is greater than the first frequency;
providing (256) each of the first and second sets of forcer signals (FRC) concurrently to at least a portion of a plurality of electrodes (18, 54, 56, 58, 60, 62, 64, 66, 68) associated with the resonator gyroscope (10), the plurality of electrodes (18, 54, 56, 58, 60, 62, 64, 66, 68) being arranged about the sensitive axis (70) to provide a substantially periodic motion of a resonator (16) concurrently in each of a first vibration pattern mode and a second vibration pattern mode, respectively;
measuring (258) pickoff signals (PO) associated with at least a portion of the plurality of electrodes in response to the substantially periodic motion of the resonator (16) to measure rotation (ROT) about the sensitive axis (70) in the first vibration pattern mode;
**characterised by** concurrently calibrating the resonator gyroscope (10) in the second vibration pattern mode.

8. The method (250) of claim 7, wherein providing the substantially periodic motion of the resonator (16) comprises providing the substantially periodic motion of the resonator (16) concurrently in each of an N=2 vibration pattern mode and an N=3 vibration pattern mode vibration, wherein N is half the number of antinodes of the vibration pattern mode.

9. The method (250) of claim 7, wherein measuring the pickoff signals (PO) comprises measuring the rotation (ROT) of the resonator gyroscope (10) about the sensitive axis (70) in response to first pickoff signals associated with the first vibration pattern mode and concurrently measuring second pickoff signals associated with the second vibration pattern mode and calibrating the resonator gyroscope (10) in response to a calibration signal.

10. The method (250) of claim 7, wherein measuring the pickoff signals (PO) comprises:
measuring the rotation (ROT) of the resonator gyroscope (10) about the sensitive axis (70) in response to first pickoff signals associated with the first vibration pattern mode and concurrently measuring second pickoff signals associated with the second vibration pattern mode to calibrate the resonator gyroscope (10) in response to a calibration signal during a first time duration;
measuring the rotation (ROT) of the resonator gyroscope (10) about the sensitive axis (70) in response to the second pickoff signals and concurrently measuring the second pickoff signals to calibrate the resonator gyroscope (10) in response to the calibration signal during a second time duration; and
sequentially alternating between the first time duration and the second time duration.

## Patentansprüche

1. Ein Resonatorkreisel (10), der Folgendes umfasst:
ein Erfassungssystem (12, 50), das eine Vielzahl von Elektroden (18, 54, 56, 58, 60, 62, 64, 66, 68) umfasst, die um eine Empfindlichkeitsachse (70) angeordnet und konfiguriert sind, um einen Resonator (16) auf der Grundlage einer Vielzahl von Forcer-Signalen (FRC), die an die Vielzahl von Elektroden (18, 54, 56, 58, 60, 62, 64, 66, 68) angelegt werden, elektrostatisch in eine im Wesentlichen periodische Bewegung zu zwingen, und konfiguriert, um eine Anzeige der Rotation (ROT) um eine Empfindlichkeitsachse (70) des Resonatorkreisels (10) zu liefern; und
eine Steuerung (14), konfiguriert, um die Vielzahl von Forcer-Signalen (FRC) zu erzeugen, um die im Wesentlichen periodische Bewegung des Resonators (16) gleichzeitig in einer Vielfalt separater Vibrationsmustermodi zu liefern, die verschiedene Frequenzen haben, und um in einem ersten der Vibrationsmustermodi die Rotation (ROT) des Resonatorkreisels (10) um die Empfindlichkeitsachse (70) als Reaktion auf eine Vielzahl von Abgreifsignalen (pickoff signals, PO) zu messen, die mit der im Wesentlichen periodischen Bewegung verknüpft sind;
**dadurch gekennzeichnet, dass** die Steuerung weiter konfiguriert ist, um den Resonatorkreisel (10) gleichzeitig in einem zweiten der Vibrationsmustermodi zu kalibrieren.

2. Der Resonatorkreisel (10) gemäß Anspruch 1, wobei der erste der Vibrationsmustermodi ein erster Vibrationsmustermodus mit einer ersten Frequenz ist und der zweite der Vibrationsmustermodi ein zweiter Vibrationsmustermodus mit einer zweiten Frequenz ist, die höher ist als die erste Frequenz.

3. Der Resonatorkreisel (10) gemäß Anspruch 1, wobei die Vibrationsmustermodi einen Vibrationsmustermodus N=2 und einen Vibrationsmustermodus N=3 umfassen, worin N die Hälfte der Anzahl der Schwingungsbäuche des Vibrationsmustermodus ist.

4. Der Resonatorkreisel (10) gemäß Anspruch 3, wobei die Steuerung (14) konfiguriert ist, um zwischen der Kalibrierung des Resonatorkreisels (10) über den zweiten Vibrationsmustermodus bei gleichzeitiger Messung der Rotation (ROT) des Resonatorkreisels (10) um die Empfindlichkeitsachse (70) über den ersten Vibrationsmustermodus und der Kalibrierung des Resonatorkreisels (10) über den ersten Vibrationsmustermodus bei gleichzeitiger Messung der Rotation (ROT) des Resonatorkreisels (10) um die Empfindlichkeitsachse (70) über den zweiten Vibrationsmustermodus zu wechseln.

5. Der Resonatorkreisel (10) gemäß Anspruch 1, wobei die Steuerung (14) konfiguriert ist, um die Vielzahl von Forcer-Signalen (FRC) zu erzeugen, um die Schwingungsresonanzbewegung des Resonators (16) axialsymmetrisch mit Bezug auf die Empfindlichkeitsachse (70) zu liefern.

6. Ein mehrachsiges Kreiselsystem (200), das den Resonatorkreisel (10) gemäß Anspruch 1 umfasst, konfiguriert als erster Resonatorkreisel (202), konfiguriert, um die Rotation (ROT) des mehrachsigen Kreiselsystems (200) um eine X-Achse zu messen, wobei das mehrachsige Kreiselsystem (200) weiter Folgendes umfasst:
einen zweiten Resonatorkreisel (204), konfiguriert, um die Rotation (ROT) des mehrachsigen Kreiselsystems (200) um eine Y-Achse zu messen; und
einen dritten Resonatorkreisel (206), konfiguriert, um die Rotation (ROT) des mehrachsigen Kreiselsystems (200) um eine Z-Achse zu messen.

7. Ein Verfahren (250) zum Steuern eines Resonatorkreisels (10), das Folgendes umfasst:
das Erzeugen (252) eines ersten Satzes von Forcer-Signalen (FRC) mit einer ersten Frequenz;
das Erzeugen (254) eines zweiten Satzes von Forcer-Signalen (FRC) mit einer zweiten Frequenz, die höher ist als die erste Frequenz;
das Liefern (256) des ersten und des zweiten Satzes von Forcer-Signalen (FRC) gleichzeitig an mindestens einen Teil einer Vielzahl von Elektroden (18, 54, 56, 58, 60, 62, 64, 66, 68), die mit dem Resonatorkreisel (10) verknüpft sind, wobei die Vielzahl von Elektroden (18, 54, 56, 58, 60, 62, 64, 66, 68) um die Empfindlichkeitsachse (70) angeordnet ist, um in einem ersten Vibrationsmustermodus und einem zweiten Vibrationsmustermodus gleichzeitig für eine im Wesentlichen periodische Bewegung eines Resonators (16) zu sorgen;
das Messen (258) von Abgreifsignalen (PO), die mit mindestens einem Teil der Vielzahl von Elektroden verknüpft sind, als Reaktion auf die im Wesentlichen periodische Bewegung des Resonators (16), um die Rotation (ROT) um die Empfindlichkeitsachse (70) im ersten Vibrationsmustermodus zu messen;
**gekennzeichnet durch** das gleichzeitige Kalibrieren des Resonatorkreisels (10) im zweiten Vibrationsmustermodus.

8. Das Verfahren (250) gemäß Anspruch 7, wobei das Bereitstellen der im Wesentlichen periodischen Bewegung des Resonators (16) das Bereitstellen der im Wesentlichen periodischen Bewegung des Resonators (16) gleichzeitig sowohl in einem Vibrationsmustermodus N=2 als auch in einem Vibrationsmustermodus N=3 umfasst, worin N die Hälfte der Anzahl von Schwingungsbäuchen des Vibrationsmustermodus ist.

9. Das Verfahren (250) gemäß Anspruch 7, wobei das Messen der Abgreifsignale (PO) Folgendes umfasst:
das Messen der Rotation (ROT) des Resonatorkreisels (10) um die Empfindlichkeitsachse (70) als Reaktion auf erste Abgreifsignale, die mit dem ersten Vibrationsmustermodus verknüpft sind, und das gleichzeitige Messen zweiter Abgreifsignale, die mit dem zweiten Vibrationsmustermodus verknüpft sind, und das Kalibrieren des Resonatorkreisels (10) als Reaktion auf ein Kalibriersignal.

10. Das Verfahren (250) gemäß Anspruch 7, wobei das Messen der Abgreifsignale (PO) Folgendes umfasst:
das Messen der Rotation (ROT) des Resonatorkreisels (10) um die Empfindlichkeitsachse (70) als Reaktion auf erste Abgreifsignale, die mit dem ersten Vibrationsmustermodus verknüpft sind, und das gleichzeitige Messen zweiter Abgreifsignale, die mit dem zweiten Vibrationsmustermodus verknüpft sind, um den Resonatorkreisel (10) als Reaktion auf ein Kalibriersignal während einer ersten Zeitspanne zu kalibrieren;
das Messen der Rotation (ROT) des Resonatorkreisels (10) um die Empfindlichkeitsachse (70) als Reaktion auf die zweiten Abgreifsignale und das gleichzeitige Messen der zweiten Abgreifsignale zur Kalibrierung des Resonatorkreisels (10) als Reaktion auf das Kalibriersignal während einer zweiten Zeitspanne; und
das sequenzielle Abwechseln zwischen der ersten Zeitspanne und der zweiten Zeitspanne.

## Revendications

1. Gyroscope à résonateur (10) comprenant :
un système de détection (12, 50) comprenant une pluralité d'électrodes (18, 54, 56, 58, 60, 62, 64, 66, 68) disposées autour d'un axe sensible (70) et configuré pour forcer de façon électrostatique un résonateur (16) à effectuer un mouvement substantiellement périodique sur la base d'une pluralité de signaux de forceur (FRC) appliqués à la pluralité d'électrodes (18, 54, 56, 58, 60, 62, 64, 66, 68), et configuré pour fournir une indication de rotation (ROT) autour d'un axe sensible (70) du gyroscope à résonateur (10) ; et
un moyen de commande (14) configuré pour générer la pluralité de signaux de forceur (FRC) afin de fournir le mouvement substantiellement périodique du résonateur (16) simultanément dans chacun parmi une pluralité de modes de modèle de vibration séparés présentant des fréquences différentes et de mesurer la rotation (ROT) du gyroscope à résonateur (10) autour de l'axe sensible (70) en réponse à une pluralité de signaux de détection (PO) associés au mouvement substantiellement périodique dans un premier parmi les modes de modèle de vibration ;
**caractérisé en ce que** le moyen de commande est en outre configuré pour étalonner simultanément le gyroscope à résonateur (10) dans un deuxième parmi les modes de modèle de vibration.

2. Gyroscope à résonateur (10) selon la revendication 1, dans lequel le premier parmi les modes de modèle de vibration est un premier mode de modèle de vibration présentant une première fréquence et le deuxième parmi les modes de modèle de vibration est un deuxième mode de modèle de vibration présentant une deuxième fréquence supérieure à la première fréquence.

3. Gyroscope à résonateur (10) selon la revendication 1, dans lequel les modes de modèle de vibration comprennent un mode de modèle de vibration N=2 et un mode de modèle de vibration N=3, où N est la moitié du nombre de ventres du mode de modèle de vibration.

4. Gyroscope à résonateur (10) selon la revendication 3, dans lequel le moyen de commande (14) est configuré pour alterner entre l'étalonnage du gyroscope à résonateur (10) via le deuxième parmi les modes de modèle de vibration tout en mesurant la rotation (ROT) du gyroscope à résonateur (10) autour de l'axe sensible (70) via le premier parmi les modes de modèle de vibration et l'étalonnage du gyroscope à résonateur (10) via le premier parmi les modes de modèle de vibration tout en mesurant la rotation (ROT) du gyroscope à résonateur (10) autour de l'axe sensible (70) via le deuxième parmi les modes de modèle de vibration.

5. Gyroscope à résonateur (10) selon la revendication 1, dans lequel le moyen de commande (14) est configuré pour générer la pluralité de signaux de forceur (FRC) afin de fournir le mouvement de résonance vibratoire du résonateur (16) d'une manière axisymétrique par rapport à l'axe sensible (70).

6. Système de gyroscopes multiaxial (200) comprenant le gyroscope à résonateur (10) selon la revendication 1 configuré comme un premier gyroscope à résonateur (202) configuré pour mesurer la rotation (ROT) du système de gyroscopes multiaxial (200) autour d'un axe X, le système de gyroscopes multiaxial (200) comprenant en outre :
un deuxième gyroscope à résonateur (204) configuré pour mesurer la rotation (ROT) du système de gyroscopes multiaxial (200) autour d'un axe Y; et
un troisième gyroscope à résonateur (206) configuré pour mesurer la rotation (ROT) du système de gyroscopes multiaxial (200) autour d'un axe Z.

7. Procédé (250) destiné à commander un gyroscope à résonateur (10), le procédé comprenant :
la génération (252) d'un premier ensemble de signaux de forceur (FRC) présentant une première fréquence ;
la génération (254) d'un deuxième ensemble de signaux de forceur (FRC) présentant une deuxième fréquence supérieure à la première fréquence ;
la délivrance (256) de chacun parmi les premier et deuxième ensembles de signaux de forceur (FRC) simultanément à une partie au moins de la pluralité d'électrodes (18, 54, 56, 58, 60, 62, 64, 66, 68) associées au gyroscope à résonateur (10), la pluralité d'électrodes (18, 54, 56, 58, 60, 62, 64, 66, 68) étant disposées autour de l'axe sensible (70) pour créer un mouvement substantiellement périodique d'un résonateur (16) simultanément dans chacun parmi un premier mode de modèle de vibration et un deuxième mode de modèle de vibration, respectivement ;
la mesure (258) de signaux de détection (PO) associés à une partie au moins de la pluralité d'électrodes en réponse au mouvement substantiellement périodique du résonateur (16) pour mesurer la rotation (ROT) autour de l'axe sensible (70) dans le premier mode de modèle de vibration ;
**caractérisé par** l'étalonnage simultané du gyroscope à résonateur (10) dans le deuxième mode de modèle de vibration.

8. Procédé (250) selon la revendication 7, dans lequel la création du mouvement substantiellement périodique du résonateur (16) comprend la création du mouvement substantiellement périodique du résonateur (16) simultanément dans chacun parmi un mode de modèle de vibration N=2 et un mode de modèle de vibration N=3, où N est la moitié du nombre de ventres du mode de modèle de vibration.

9. Procédé (250) selon la revendication 7, dans lequel la mesure des signaux de détection (PO) comprend la mesure de la rotation (ROT) du gyroscope à résonateur (10) autour de l'axe sensible (70) en réponse à des premiers signaux de détection associés au premier mode de modèle de vibration et simultanément la mesure de deuxièmes signaux de détection associés au deuxième mode de modèle de vibration et l'étalonnage du gyroscope à résonateur (10) en réponse à un signal d'étalonnage.

10. Procédé (250) selon la revendication 7, dans lequel la mesure de signaux de détection (PO) comprend :
la mesure de la rotation (ROT) du gyroscope à résonateur (10) autour de l'axe sensible (70) en réponse à des premiers signaux de détection associés au premier mode de modèle de vibration et simultanément la mesure de deuxièmes signaux de détection associés au deuxième mode de modèle de vibration pour l'étalonnage du gyroscope à résonateur (10) en réponse à un signal d'étalonnage pendant une première durée ;
la mesure de la rotation (ROT) du gyroscope à résonateur (10) autour de l'axe sensible (70) en réponse aux deuxièmes signaux de détection et simultanément la mesure des deuxièmes signaux de détection pour l'étalonnage du gyroscope à résonateur (10) en réponse à un signal d'étalonnage pendant une deuxième durée ; et
l'alternance séquentielle entre la première durée et la deuxième durée.
